Europäisches Patentamt

European Patent Office

Office européen des brevets

(11) Publication number: **0 069 461**

A1

(12) # EUROPEAN PATENT APPLICATION

(21) Application number: 82302845.1

(22) Date of filing: 02.06.82

(51) Int. Cl.³: **C 08 F 6/28**
//(C08F6/28, 10/06)

(30) Priority: 05.06.81 JP 85676/81

(43) Date of publication of application:
12.01.83 Bulletin 83/2

(84) Designated Contracting States:
DE FR GB IT NL

(71) Applicant: TOA NENRYO KOGYO K.K.
1-1 Hitotsubashi, 1-Chome Chiyoda-Ku
Tokyo(JP)

(72) Inventor: Ueno, Hiroshi
398-1, Ooaza Haneo Nanekawa-mura
Hiki-gun Saitama-ken(JP)

(72) Inventor: Kusano, Yoshihisa
1734-3, Ooaza Takahagi Hidaka-machi
Irum-gun Saitama-ken(JP)

(72) Inventor: Imai, Chihiro
49-5 Utsukushigaoka 4-chome Midori-ku
Yokohama-shi Kanagawa-ken(JP)

(72) Inventor: Yoda, Makoto
5024-270, Ooaza Kashata Kawagoe-shi
Saitama-ken(JP)

(74) Representative: Northover, Robert Frank et al,
Esso Chemical Research Centre P.O. Box 1
Abingdon Oxfordshire, OX13 6BB(GB)

(54) Process for purifying propylene polymers.

(57) A method of purifying propylene polymers is disclosed. A polypropylene-liquid propylene slurry produced by polymerization in the presence of a catalyst containing an organoaluminum compound and a titanium halide is contacted with an alcohol or diketone and with oxygen. Thereafter, the propylene polymer is washed with liquid propylene.

EP 0 069 461 A1

Croydon Printing Company Ltd.

PROCESS FOR PURIFYING PROPYLENE POLYMERS

The present invention relates to a process for purifying a propylene polymer, and more particularly, to a process for removing catalyst residues from a propylene polymer obtained by polymerizing propylene in liquid propylene.

During the past years, several methods have been proposed for removing catalyst residues from propylene polymers produced by bulk polymerization processes (homopolymerization and copolymerization).

For example, Japanese Patent Publication No. 79589/1975 discloses a process to remove catalyst residues by bringing a polymer slurry containing polypropylene into contact countercurrently with liquid propylene. This process, however, has a disadvantage that the contact of polymer slurry and liquid propylene generates a high molecular weight polymer and the removal of catalyst residues is not complete without an additional catalyst removal process.

Japanese Published Application No. 102681/1975 discloses a process to suppress the formation of high molecular weight polymer by performing the step of contacting the polymer slurry with liquid propylene in the presence of propylene oxide. This process for removal of catalyst residues still requires an additional catalyst removal process.

Japanese Patent Publication No. 6889/1979 discloses a process to remove catalyst residues by bringing the polymer slurry into contact countercurrently with liquid propylene in the presence of alcohol, removing propylene by flashing, and subsequently bringing it into contact with gaseous epoxide. However, a substantial amount of metal components, particularly titanium, are not removed by the process.

Japanese Patent Publication No. 13607/1967 discloses an improved process for purifying a polyolefin containing catalyst residues with an alkaline alcohol solution of pH 9 to 12. The purification is performed at a temperature lower than 75°C and under atmospheric pressure in the presence of oxygen. This process, however, presents the following problems: (1) the solution should be kept at pH 9 to 12 with an alkaline alkoxide, (2) much metal is left unremoved in the finished polymer, and (3) the finished polymer is poor in appearance due to the residues of alkali metal and amine compound.

Japanese Patent Publication No. 34980/1976 discloses a process for purifying polyolefin by bringing a polyolefin containing catalyst residues into contact with oxygen at a pH lower than 9 in the presence of alcohol. This process requires careful maintenance of the catalyst at a pH lower than 9, particularly at pH 3 to 6, and the removal of titanium is not necessarily satisfactory.

The purpose of the present invention is to provide a process for purifying a propylene polymer which is obtained by homopolymerizing propylene or copolymerizing propylene and ethylene or alpha-olefin (excluding propylene) such as n-butene-1, n-pentene-1, 4-methylpentene-1, or n-hexene-1 in the presence of a polymerization catalyst containing a titanium halide and organoaluminum compound.

The process of the present invention comprises purifying, i.e. deashing a slurry of propylene polymer, bringing the slurry of propylene polymer into contact with an agent capable of solubilizing titanium halide compounds and oxygen and subsequently liquid propylene, said propylene polymer being obtained by polymerizing propylene or propylene and ethylene or alpha-olefin in liquid propylene in the presence of a catalyst containing a titanium halide and organoaluminum compound.

As indicated above, the propylene polymer useful in the present invention is prepared using a Ziegler-type catalyst, particularly an organoaluminum titanium halide type. Examples of the titanium halide used in the polymerization catalyst include chlorides and bromides of titanium, and preferable among these are titanium trichloride and titanium tetrachloride. The titanium trichloride may be obtained by reducing titanium tetrachloride with hydrogen, metallic aluminum or an organoaluminum compound. These titanium chlorides may be activated by contact with an activator such as an electron donor compound such as alcohol, ether, ester, amine, acid halide, and acid anhydride; and/or a halogen-containing compound such as titanium tetrachloride, silicon tetrachloride, tin tetrachloride, hydrogen halide, and halogenated hydrocarbon, or halogen such as iodine and chlorine.

These titanium chlorides may be supported by a proper carrier such as a magnesium compound (chloride, oxide, hydroxide, alkoxide, etc.), a calcium compound (chloride, oxides, etc.), silica, alumina, titania, boria, chromia, etc.

Preferred titanium chlorides include those containing active titanium chloride, which is obtained by reducing titanium tetrachloride with an organoaluminum compound and treating the resultant titanium chloride with the above-mentioned activator, or by bringing titanium tetrachloride into contact with the above-mentioned carrier and activator.

The preferred organoaluminum compounds used in combination with titanium halide as the polymerization catalyst include triethyl aluminum, diethyl aluminum chloride, ethyl aluminum dichloride, and ethyl aluminum sesquichloride.

Titanium halide and organoaluminum compound as the polymerization catalyst may be used in combination with the above-mentioned electron donor compound, phosphorus-containing compound, sulfur-containing compound, etc.

Polymerization is accomplished by bringing propylene or propylene and other olefin, as the case may be, into contact with the aforesaid catalyst in liquid propylene, in the presence of a molecular weight modifier such as hydrogen. Polymerization is accomplished under varied conditions according to the catalyst to be used, the object and use of polymer to be obtained, and the process to be employed. Usually, the reaction temperature is 30 to 100°C and the pressure is high enough to keep propylene in the liquid form at the reaction temperature.

The polypropylene obtained according to the aforesaid process is purified in accordance with the present invention by contacting the polypropylene slurry with an agent capable of solubilizing titanium halide compounds (such as alcohol and/or diketone) and oxygen and subsequently washing the polypropylene with liquid propylene. In the initial step, the polypropylene slurry may be brought into contact with an alcohol or mixture thereof and/or diketone or mixture thereof and oxygen simultaneously. Alternatively, the polypropylene slurry may initially be brought into contact with an alcohol and/or diketone and then with oxygen. The latter method is preferable because halogen and aluminum are removed more effectively.

The alcohol used in this invention is an aliphatic or alicyclic alcohol having 2 to 10 carbon atoms, and preferably a branched alcohol having 3 to 8 carbon atoms. Examples are 2-propanol, 2-butanol, 2-methyl-2-propanol, 2-methyl-2-butanol, 2,3-dimethyl-2-butanol, 3-methyl-3-pentanol, 3-ethyl-3-pentanol, 2-methyl-2-hexanol, 3-methyl-3-hexanol, and 3,5-dimethyl-3-hexanol. Also preferred is cyclohexanol. Mixtures of these alcohols may be used.

The ketone used in this invention is exemplified by alpha-diketone such as diacetyl, acetylpropionyl, acetylbutyl, dipropionyl, dibutylyl, and acetylbenzoyl; beta-diketone such as acetylacetone, propionyl acetone, and butylyl acetone. Preferable among them is beta-diketone, especially acetylacetone. Mixtures of these diketones may be used.

These alcohols and diketones may be used in pure or diluted form or may be dissolved in liquid propylene or other suitable carrier. Also, mixtures of the alcohol and diketone may be used.

The alcohol and/or diketone is used in an amount more than 1 mole, preferably 2 to 100 moles, more preferably 5 to 30 moles, per mole of the organoaluminum compound contained in the the catalyst.

The oxygen with which the polypropylene slurry is brought into contact may be oxygen gas or air. In addition, any compound which liberates molecular oxygen or an oxygen radical in situ may be used. Examples of such a compound include hydrogen peroxide, benzoyl peroxide, t-butylhydroperoxide, and dicumyl peroxide.

The oxygen is used in an amount of more than 0.01 gram mole preferably 1 to 30 gram moles, for 1 gram atom of titanium in the polymerzation catalyst. If the quantity of oxygen is under this limit, the purification will not be fully attained, and if the quantity is over this limit, there is a danger of catalyst system contamination and even explosion.

The step of contacting polypropylene with alcohol and/or diketone and oxygen should preferably be performed for 1 to 60 minutes at a temperature of 20 to 100°C and under a pressure from atmospheric pressure to a pressure of 50 kg/cm$^2$.

The polypropylene slurry which has been brought into contact with an alcohol and/or diketone and oxygen is further brought into contact with liquid propylene, whereby the catalyst components are mostly removed. The contact with liquid propylene may be accomplished in any manner, but complete contact should preferably be performed countercurrently.

The liquid propylene may be used in any amount, but usually in an amount equal to or more than the polypropylene slurry. In addition, the contact with liquid propylene may be performed one or more times. Contact performed at 10 to 80°C for 1 to 60 minutes should be sufficient for most applications.

The polypropylene slurry purified as mentioned above is processed into final product through propylene separation, drying, pelletization, and, if necessary, incorporation of additives.

In summary, the process of this invention results in the reduction of catalyst residues, particularly titanium, in finished polypropylene to low levels. Thus, the process of this invention eliminates disadvantages resulting from the residual catalyst components and improves the color of finished polypropylene.

The invention is illustrated by the following examples.

Example 1

Preparation of titanium trichloride catalyst component

Into a flask equipped with a stirrer were charged with agitation at 0°C 100 ml of purified heptane and 60 ml of titanium tetrachloride. Then, to this heptane solution of titanium tetrachloride were added dropwise with agitation at 0°C over 6 hours a mixture solution consisting of 82 ml of diethylaluminum chloride and 84 ml of purified heptane.

After dropwise addition, the content was heated with stirring to 65°C over 1 hour, and stirring was continued for another 1 hour at 65°C to give a solid product. After separation, the solid product was washed with purified heptane and then dried at 65°C under reduced pressure for 30 minutes. The resulting solid product (called reduced solid hereinafter) was black violet in color. The peak of beta-titanium trichloride was not detected in the X-ray diffraction spectrum.

Fifty-two grams of the reduced solid was dispersed into 80 ml of purified heptane. This dispersion was mixed with stirring with a solution prepared by dissolving 41 g of hexachloroethane (equivalent to 0.7 mole per 1 gram atom of titanium in the reduced solid) and 42 ml of di-n-butyl ether (equivalent to 1.0 mole per 1 gram atom of titanium in the reduced solid) into 66 ml of purified heptane. The mixture solution was stirred at 85°C for 5 hours, washed five times with 150 ml of purified heptane, and dried at 65°C for 30 minutes to give the titanium trichloride catalyst component.

Polymerization of propylene

Into a 3-liter autoclave was charged a mixture liquid of 15 mg of the catalyst component obtained as above, diethylaluminum chloride in an amount equivalent to 15 moles per 1 gram atom of titanium in the catalyst component, and ethyl benzoate in an amount equivalent to 0.02 mole for 1 mole of the diethylaluminum chloride. Then, 1,200 ml (in standard

- 6 -

conditions) and 1,600 ml of liquid propylene were added. After that, the polymerization of propylene was performed at 70°C for 5.5 hours. The resulting propylene polymer was found to contain 15 ppm of titanium.

Purification of propylene polymer

To the slurry of the resulting polymer was added isopropyl alcohol in an amount of 10 moles for 1 mole of diethylaluminum chloride used in the polymerization of propylene, maintaining contact for 1 minute at 63°C, and then dry air in an amount equivalent to 2.0 moles as oxygen for 1 mole of titanium trichloride in the catalyst component used for the polymerization of propylene.

Subsequently, the slurry was stripped of liquid propylene. The solids were washed twice with 1.5 liters of liquid propylene and dried at 60°C under reduced pressure to give polypropylene powder. The resulting polypropylene powder was pure white, and the content of ash in the polypropylene was 3 ppm for Ti, 11 ppm for Al, and 18 ppm for Cl.

Example 2

Purification of propylene polymer was carried out as in Example 1 except that isopropyl alcohol and dry air were added simultaneously to the polymer slurry and contact was maintained for 15 minutes at 62°C in the process for purifying the propylene polymer. The content of ash in the polypropylene was 3 ppm for Ti, 15 ppm for Al, and 22 ppm for Cl.

Examples 3 to 5

Purification of propylene polymer was carried out as in Example 1 except that air was used in amounts of 5, 10, and 30 moles as oxygen per 1 gram atom of titanium in the catalyst component. The results are shown in Table 1.

TABLE 1

|  |  | Ash content (ppm) | | |
|---|---|---|---|---|
| Example | Oxygen/Titanium (molar ratio) | Ti | Al | Cl |
| 3 | 5 | 2 | 11 | 18 |
| 4 | 10 | 2 | 13 | 18 |
| 5 | 30 | 2 | 14 | 19 |

Examples 6 to 8

Purification of propylene polymer was carried out as in Example 1 except that isopropyl alcohol (IPA) was used in amounts of 5, 15, and 20 moles for 1 mole of diethylaluminum chloride (DEAC). The results are

- 7 -

shown in Table 2.

TABLE 2

| Example | IPA/DEAC (molar ratio) | Ti | Al | Cl |
|---|---|---|---|---|
| | | Ash content (ppm) | | |
| 6 | 5 | 4 | 13 | 21 |
| 7 | 15 | 2 | 10 | 16 |
| 8 | 20 | 2 | 9 | 16 |

Comparative Example 1

Purification of propylene polymer was carried out as in Example 1 except that air was not used. The content of ash in the polypropylene was 11 ppm for Ti, 19 ppm for Al, and 41 ppm for Cl, and the polypropylene color was poor.

Comparative Example 2

Purification of propylene polymer was carried out as in Example 1 except that isopropyl alcohol was not used. The content of ash in the polypropylene was 15 ppm for Ti, 50 ppm for Al, and 98 ppm for Cl, and the polypropylene color was very poor.

Comparative Example 3

Purification of propylene polymer was carried out as in Example 1 except that washing with liquid propylene was not performed after contact treatment with isopropyl alcohol and air. The content of ash in the polypropylene was 13 ppm for Ti, 31 ppm for Al, and 70 ppm for Cl. This result suggests the necessity of washing.

Examples 9 to 11

Purification of propylene polymer was carried out as in Example 1 except that isopropyl alcohol was replaced by alcohols as shown in Table 3. The results are shown in Table 3.

TABLE 3

| Example | Alcohol | Ti | Al | Cl |
|---|---|---|---|---|
| | | Ash content (ppm) | | |
| 9 | 2-butanol | 2 | 10 | 17 |
| 10 | 2-methyl-2butanol | 2 | 11 | 18 |
| 11 | 3-methyl-3-hexanol | 2 | 13 | 19 |

Example 12

Purification of propylene polymer was carried out as in Example 1 except that isopropyl alcohol was replaced by acetylacetone which was used in an amount of 5 moles for 1 mole of diethylaluminum chloride used in the polymerization of propylene. The content of ash in the polypropylene was 2 ppm for Ti, 6 ppm for A1, and 15 ppm for C1. The resulting polymer had good color.

Comparative Example 4

Purification of propylene polymer was carried out as in Example 11 except that air was not used. The content of ash in the polypropylene was 10 ppm for Ti, 29 ppm for A1, and 35 ppm for C1. The resulting polymer had poor color.

CLAIMS

1.    A method of removing catalyst residues from polypropylene produced by polymerizing propylene in the presence of a catalyst containing an organoaluminum compound and titanium halide to produce a slurry of polypropylene and propylene by washing the polypropylene with liquid propylene, characterized by contacting the slurry with an agent capable of solubilizing the titanium halide and with oxygen.

2.    A method according to claim 1 characterized in that the step of contacting the slurry with the solubilizing agent and oxygen is performed concurrently.

3.    A method according to claim 1 characterized in that the slurry is first contacted with the solubilizing agent and thereafter with oxygen.

4.    A method according to claims 1 - 3 characterized in that the solubilizing agent is a hydrocarbon selected from an alcohol and a diketone.

5.    A method according to claims 1 - 4 characterized in that the amount of oxygen contacted with the slurry is between about 0.01 gram mole and about 30 gram moles per gram atom of titanium.

6.    A method for manufacturing a propylene polymer which comprises:
(a)    polymerizing propylene in the presence of a catalyst containing a titanium halide and an organoaluminum compound to produce a slurry of a propylene polymer in liquid propylene;
(b)    deashing the propylene polymer by washing with liquid polypropylene characterized in that prior to the washing step or concurrently therewith the slurry is contacted with an effective amount of an agent capable of solubilizing the titanium halide and with about 0.1 to about 30 gram moles of oxygen per gram atoms of titanium in the catalyst.

7.    A method according to claim 6 characterized in that the propylene polymer is polypropylene.

0069461

- 10 -

8.    A method according to claim 6 characterized in that the
propylene polymer is a copolymer which includes propylene and an alpha-
olefin.

9.    A method according to claims 6 - 8 characterized in that the
oxygen is provided by air.

10.    A method according to claims 6 - 8 characterized in that the
oxygen is provided by a compound capable of liberating molecular oxygen
or oxygen radical under the conditions in which the compound is contacted with the slurry.

11.    A method according to claims 6 - 10 characterized in that
the slurry is first contacted with the agent and thereafter contacted
with the oxygen.

12.    A method according to claims 6 - 11 characterized in that
the agent is present in an amount between about 5 to about 30 moles per
mole of the organoaluminum contained in the catalyst.

13.    A method according to claim 12 characterized in that the organoaluminum compound is an aluminum chloride and the titanium halide
is titanium trichloride.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-2 408 626 (SUMITOMO) --- | | C 08 F 6/28 // (C 08 F 6/28 C 08 F 10/06 ) |
| A | CHEMICAL ABSTRACTS, vol. 92, no. 4, January 1980, page 51, no. 23512g, Columbus Ohio (USA); & JP - A - 79 126 291 (SUMITOMO CHEMICAL CO., LTD.) (01-10-1979) *Abstract* ----- | | |

TECHNICAL FIELDS SEARCHED (Int. Cl. ³)

C 08 F

The present search report has been drawn up for all claims

| Place of search | Date of completion of the search | Examiner |
|---|---|---|
| THE HAGUE | 28-09-1982 | BOLETTI C.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82